# EUROPEAN PATENT APPLICATION

(11) **EP 2 056 597 A2**
(43) Date of publication of application: **06.05.2009**
(21) Application number: 09002566.9
(22) Date of filing: 21.06.2001
(51) Int. Cl.: H04N 5/76

(54) **Time shifted interactive television**

(30) Priority: 26.06.2000 US 214129 P; 27.09.2000 US 235632 P; 17.11.2000 US 249513 P; 10.01.2001 US 260770 P; 24.01.2001 US 263705 P
(62) Divisional of application: 01943775.5
(71) Applicant: NDS Limited, West Drayton Middlesex UB7 0BQ (GB)
(72) Inventor: Tsuria, Yossi, Jerusalem 91235 (IL); Wald, Stephanie, Jerusalem 91235 (IL); Tirosh, Gadi, Jerusalem 91235 (IL); Darshan, Ezra, Jerusalem 91235 (IL); Richardson, David, Jerusalem 91235 (IL); Fink, David, Jerusalem 91235 (IL); Shlissel, Moshe, Jerusalem 91235 (IL); Vinokurov, Menachem, Jerusalem 91235 (IL); Wachtfogel, Reuven, Jerusalem 91235 (IL); Cohen, Einat, Jerusalem 91235 (IL); Bastable, Ian, Staines TW18 4EX Middlesex (GB); Jacobs, Eli, c/o NDS Technologies Israel Ltd., Jerusalem 91235 (IL)
(74) Representative: White, Duncan Rohan

(57) **Abstract**

A method for displaying advertisements associated with at least one item of an interactive television application, the method comprising transmitting an interactive television application including said at least one item, the interactive television application having an advertising slot adapted to be associated with an advertisement associated with said at least one item, storing the interactive television application; transmitting a replacement advertisement; and associating, in response to said transmitting step, the advertising slot with the replacement advertisement.

## Description

### FIELD OF THE INVENTION

The present invention relates generally to interactive digital television, and more particularly to interactive digital television associated with digital television recording.

### BACKGROUND OF THE INVENTION

In interactive television applications a user may perform operations in order to receive information that is related to a television program, as well as receiving the television program. The user may additionally perform operations on such received information, such as, for example, purchasing goods advertised directly or indirectly in the television program.

The advent of digital television recording created new opportunities and challenges for interactive television applications. Interactive television systems in which subscriber units do not have the capability of digital television recording may employ only real-time interactive television applications, while interactive television systems in which subscriber units have the capability of digital television recording may employ both real-time interactive television applications and time-shifted interactive television applications.

However, when a time-shifted interactive television application in which a television program is recorded and played in a time-shifted mode is employed, a user may find that some parts of the interactive application that were relevant when the television program was broadcast may become obsolete, and that other parts of the interactive application may require updates. Therefore, mechanisms and methods that manage interactive applications, particularly in an environment in which the interactive applications may be digitally recorded, may be highly desired.

Some aspects of technologies that may be useful in understanding the present invention are described in the following patents and patent applications:

US Patent 5,786,845 to Tsuria which describes a television receiver assembly including a multi-channel television signal decoder coupled to a source of incoming television signals, a multi-channel television display coupled to the decoder for displaying received decoded television signals, a channel changing device operative to change the channel decoded by the decoder and displayed by the display, the channel changing device being inoperative to display received decoded television signals during a channel changing interval, and an interval message provider operative to display at least one predetermined information message during the channel changing interval;

US Patents 5,539,450 and 5,592,212 to Handelman, which describe a pay television system that provides services such as gaming and shopping;

US Patent application 09/242,871 of Maissel et al and corresponding published PCT Application WO 99/01984, both assigned to NDS Limited, which describe a subscriber unit for use in a television system including a television network and transmitting apparatus for transmitting program schedule information, the subscriber unit including a receiving unit for receiving the program schedule information, a profile storage unit for storing at least one viewer preference profile of at least one television viewer, an intelligent agent for customizing the program schedule information based, at least in part, on the viewer preference profile, to produce a program guide including customized program schedule information, and display apparatus for displaying the program guide;

US Patent application 09/574,096 of Darshan et al and corresponding published PCT application WO 01/35669, both assigned to NDS Limited, which describe a method for processing a data stream including receiving a transport stream (TS), storing at least a portion of the TS, the at least a portion of the TS having a beginning and including a plurality of TS packets, determining from among the plurality of TS packets, at least one packet including a candidate access point, and storing in an index store a plurality of indications of byte offset, each byte offset being associated with an arrival time of a received TS packet;

US Patents 5,414,773 and 5,715,315 to Handelman, which describe a CATV system including a CATV network, a multiplicity of subscriber units, apparatus for transmitting over said CATV network encrypted information individually addressed to a subscriber unit and apparatus associated with each of the multiplicity of subscriber units for decoding the encrypted information addressed thereto;

US Patent application 09/515,118 of Wachtfogel et al and corresponding published PCT Application WO 00/01149, both assigned to NDS Limited, which describe a digital television recording method comprising: broadcasting a television program associated with a broadcaster set of parameters enabling access to a first set of predetermined portions of the program; operating an agent for determining whether to record the program and for associating with the program, upon recording of the program, an agent set of parameters enabling access to a second set of predetermined portions of the program; storing the program together with the broadcaster set of parameters and the agent set of parameters to generate an addressable program; retrieving at least a portion of the addressable program; displaying the at least a portion of the addressable program to a user, receiving from the user a user set of parameters enabling access to a third set of predetermined portions of the addressable program; editing the addressable program to include said user set of parameters enabling access to the third set of predetermined portions of the addressable program thereby generating an edited addressable program; and storing the edited addressable program; Unpublished PCT Application PCT/IL01/00035, filed on January 14, 2001 and assigned to NDS Limited, which describes methods and apparatus for manipulating programs and advertisements in an end-user controlled playback environment;

US Patents 5,282,249 and 5,481,609 to Cohen et al, which describe a system for controlling access to broadcast transmissions including a transmitter having a transmission encoder for scrambling the broadcast, a multiplicity of subscriber receivers, each having an identical receiving decoder, containing no secret cryptographic keys, for descrambling the broadcast and a plurality of selectable and portable executing apparatus each being operatively associatable with a receiving decoder at a partially different given time and each executing generally identical operations to generate a seed for use by the associated receiving decoder to enable the receiving decoder to descramble the broadcast;

Interactive television infrastructure Value@TV, commercially available from NDS Ltd. of Staines, Middlesex, UK, and which is described at the World Wide Web site http://www.nds.com/solutions/value_at_tv.html;

Published European Patent Application 0 680 214 assigned to AT&T Corp., which describes a technique for an interactive television ('ITV') system wherein viewers are allowed to select a desired level of advertisements with which they are provided;

US Patent 5,721,827 to Logan et al, which describes a push information system that includes a host subsystem with file server storing program segments with descriptions identifying their subject matter categories;

Published PCT Application WO 99/43111 assigned to Personal Audio, Inc., which describes an audio program and message distribution system in which a host program organizes and transmits program segments to client subscriber locations;

Published PCT Application WO 99/45702 assigned to Prevue International, Inc., which describes an interactive television program guide system in which targeted advertisements may be presented to a user and targeted actions taken in a program guide based on the user's interests;

Published European Patent Application 0 847 156 assigned to Wolfe et al, which describes a system and method for delivering programmed music and targeted advertising messages to internet based subscribers;

US Patent 5,235,643 to Anderson et al, which describes a remotely retunable receiver for use in a satellite video programming distribution system which includes the capability to retune groups of subscribers to different satellite feeds during a blackout of a video programming event;

US Patent 5,819,092 to Ferguson et al, which describes a visual editing system for creating commercial online computer services;

US Provisional Patent Application 60/214,129 of Wald et al, US Provisional Patent Application 60/260,770 of Tirosh et al, and a US Provisional Patent Application entitled "Time-Shifted Interactive Television" of Tirosh et al filed on January 24, 2001, the disclosures of which are hereby incorporated herein by reference, which describe applications of time-shifted interactive television;

US Provisional Patent Application 60/235,632 of Wald et al, the disclosure of which is hereby incorporated herein by reference, which describes extended interactive television typology; and

US Provisional Patent Application 60/249,513 of Tsuria et al, the disclosure of which is hereby incorporated herein by reference, which describes an interactive television advertising system and method.

The disclosures of all references mentioned above and throughout the present specification are hereby incorporated herein by reference.

### SUMMARY OF THE INVENTION

The present invention seeks to provide improved methods and apparatus for managing, implementing and using interactive applications that are digitally recorded and viewed in real-time and/or a time-shifted mode. The interactive applications may be associated with television programs or may be unrelated thereto, and may be transmitted together with television programs or separately therefrom.

Existing techniques of interactive television are typically useful in real-time, that is, when a television program is broadcast. However, when the television program is recorded and viewed in a time-shifted mode, for example a few hours or days after the program has been broadcast, some applications, such as, for example, purchase of items that have been offered for sale for a limited time period, may become irrelevant.

The present invention, in preferred embodiments thereof, therefore provides methods and apparatus for updating interactive content to include current data, for matching an interactive application that is employed in a time-shifted mode to current conditions, and for alerting a user of occurrence of real-time events when the user views recorded material. Additional management and manipulations of interactive content are also enabled in preferred embodiments of the present invention.

There is thus provided in accordance with a preferred embodiment of the present invention a method for recording interactive content associated with a television program, the method including receiving the television program and the interactive content associated therewith, identifying at least one interactive content stream associated with the television program, recording the television program and the at least one interactive content stream, receiving an update of at least a portion of the at least one recorded interactive content stream, and updating the at least a portion of the at least one recorded interactive content stream based, at least in part, on the update.

Additionally, the method also includes providing a user unit, and wherein the receiving the television program, identifying, recording, receiving an update, and updating are performed in the user unit.

The interactive content may be received repeatedly, and the recording preferably includes recording the at least one interactive content stream only once. The update may also be received repeatedly, and the updating preferably includes updating the at least a portion of the at least one recorded interactive content stream based, at least in part, on the update, only once.

Preferably, the update includes an updated version of the at least a portion of the at least one recorded interactive content stream. The interactive content stream preferably includes an interactive application, and the interactive application preferably includes an interactive application of one of the following categories: an integrated/enhanced television category that supports the television program; and an interactive application of an opportunistic enhanced television category.

If the interactive application is an interactive application of an integrated/enhanced television category, the interactive application is synchronized with the television program. If the interactive application is an interactive application of an opportunistic enhanced television category, the interactive application accompanies the television program but is not directly related to the television program.

Preferably, an interactive application of each of the integrated/enhanced television category and the opportunistic enhanced television category includes at least one of the following: an interactive application including one of the following interactive applications: an interactive game application, an interactive shopping application, an interactive gambling application, an interactive sports-event application, an interactive application associated with statistical information, a statistical application, an information-providing interactive application, and an interactive audio/video (A/V) application, and a combined interactive application including a combination of more than one of the interactive applications.

Preferably, the identifying includes programming an intelligent agent to search for interactive information related to the television program, and employing the intelligent agent to identify the at least one interactive content stream associated with the television program.

The recording preferably includes downloading the following: the at least one interactive content stream, metadata corresponding to the at least one interactive content stream, and software required to run interactive applications included in the at least one interactive content stream.

There is also provided in accordance with a preferred embodiment of the present invention a method for recording interactive content including a stand-alone interactive application, the method including receiving the interactive content, identifying at least one interactive content stream including the interactive content, recording the at least one interactive content stream, receiving an update of at least a portion of the at least one recorded interactive content stream, and updating the at least a portion of the at least one recorded interactive content stream based, at least in part, on the update.

The stand-alone interactive application preferably includes at least one of the following: an interactive application including one of the following interactive applications: an interactive game application, an interactive shopping application, an interactive gambling application, an interactive sports-event application, an interactive application associated with statistical information, a statistical application, an information providing interactive application, and an interactive audio/video (A/V) application, and a combined interactive application including a combination of more than one of the interactive applications.

Preferably, in both methods mentioned above, the updating may include deleting the recorded portion of the at least one interactive content stream, and recording the update. The update may be encrypted, in which case the recording preferably includes recording ae update in an encrypted form, decrypting the update to obtain a decrypted update upon retrieval, and displaying the decrypted update.

Alternatively the updating may include replacing the recorded portion of the at least one interactive content stream with a new recorded portion based, at least in part, on the update. Further alternatively, the updating may include recording the update, and utilizing the update instead of the recorded portion of the at least one interactive content stream when the portion of the at least one interactive content stream is activated.

The update may be encrypted, in which case the utilizing preferably includes decrypting the update to obtain a decrypted update, and utilizing the decrypted update.

Further in accordance with a preferred embodiment of the present invention there is provided a method for recording interactive content associated with a television program, the method including receiving the television program and the interactive content associated therewith, and automatically recording at least some of the interactive content associated with the television program when the television program is viewed in real time.

Preferably, the interactive content includes a plurality of separate components, and the automatically recording includes selectively automatically recording discrete components of the plurality of separate components based on a predetermined selection made, separately or in combination, by at least one of the following: a user, a provider of the interactive content, a provider of the television program, a provider of a telecommunication service via which the interactive content is provided, and a provider of a telecommunication service via which the television program is provided.

The television program may include a cooking program, and the interactive content includes at least one of the following: at least one recipe, nutritional information relating to at least one recipe, at least one video clip related to at least one recipe, audio information related to at least one recipe, and an offer to purchase an item.

Alternatively, the television program may include a sports program, and the interactive content includes at least one of the following: statistics information relating to at least one athlete, team or league, statistics information relating to at least one sports activity, personal details of at least one athlete, at least one video clip related to at least one athlete, team or league, audio information related to at least one athlete, or to a team or league, textual information related to at least one athlete, team or league, multimedia information related to at least one athlete, team or league, and an offer to purchase an item.

Preferably, the automatically recording includes disabling interactive operations on interactive content recorded during a first recording period, and enabling, at the end of the first recording period, interactive operations on interactive content recorded during the first recording period. The disabling preferably includes marking as unavailable at least one of the following: at least one icon used for at least one interactive operation, and at least one field used for at least one interactive operation.

There is also provided in accordance with a preferred embodiment of the present invention a method for transmitting interactive content associated with a television program to user units that include storage devices and to user units that do not include storage devices, the method including transmitting the television program and first interactive content associated therewith, the first interactive content being directed to both user units that include storage devices and user units that do not include storage devices, and transmitting second interactive content associated with the television program, the second interactive content being directed only to user units that include storage devices.

The first interactive content and the second interactive content are preferably transmitted simultaneously. Preferably, the first interactive content and the second interactive content are not identical. The first interactive content is preferably sufficient to be displayed in real time and the second interactive content is preferably useful for recording in a storage device.

In accordance with another preferred embodiment of the present invention there is provided a method for preparing a television program in a form suitable for viewing of highlights on a basis of segmentation information, the method including transmitting segmentation information associated with one of the following: at least one part of the television program, and at least one transmitted part of the television program that has already been recorded at a user unit, and enabling, upon a selection by a user, display of one of the following: at least one segmented part of the television program, and at least one segmented transmitted part of the television program that has already been recorded at a user unit

Preferably, transmission of the segmentation information associated with at least one part of the television program is performed before transmission of the television program or during real-time transmission of the television program.

Further in accordance with a preferred embodiment of the present invention there is provided a method for enabling viewing of highlights of a television program, the method including generating highlight metadata that defines at least one highlight of the television program, transmitting the television program in association with the highlight metadata, and enabling, upon a selection by a user, display of at least one part of the television program that is associated with the at least one highlight.

The method also preferably includes, prior to the generating, identifying the at least one highlight, and preparing the highlight metadata based on the at least one highlight identified.

Additionally, the method includes identifying a series of television programs that are of interest to the user, and storing highlights of all television programs in the series as a highlights album in a memory.

The series of television programs preferably includes at least one of the following: a series of games, a series of games played during a selected time period, a series of television programs related to a selected topic, and a series of television programs related to a selected topic played during a selected time period.

Preferably, the storing includes associating at least one of the following with a highlight transition module: a highlight, and a set of highlights of a television program, and storing the highlight transition module.

Additionally, the method also includes displaying the highlight transition module either before or after displaying of the following: the highlight, and the set of highlights of the television program.

The highlight transition module preferably includes at least one of the following: an advertisement, a still image or a set of still images, a module of audio effects, a module of visual effects, and a module of audio/visual effects.

There is also provided in accordance with another preferred embodiment of the present invention a method for displaying advertisements associated with at least one item of an interactive television application, the method including transmitting an interactive television application including the at least one item, the interactive television application having an advertising slot adapted to be associated with an advertisement associated with the at least one item, storing the interactive television application, transmitting a replacement advertisement, and associating, in response to the transmitting step, the advertising slot with the replacement advertisement.

Additionally, the method includes providing a user unit, and wherein the storing and the associating are performed in the user unit.

Preferably, the transmitting an interactive television application includes transmitting an initial advertisement in association with the interactive television application, and the storing includes storing the interactive television application and the initial advertisement.

Yet in accordance with another preferred embodiment of the present invention there is provided a method for displaying advertisements associated with at least one item of an interactive television application, the method including receiving an interactive television application including the at least one item, the interactive television application having an advertising slot adapted to be associated with an advertisement associated with the at least one item, storing the interactive television application, receiving a replacement advertisement, and associating, in response to the transmitting step, the advertising slot with the replacement advertisement.

Additionally, the method includes providing a user unit, and wherein the receiving, the storing and the associating are performed in the user unit

Preferably, the receiving an interactive television application includes receiving an initial advertisement in association with the interactive television application, and the storing includes storing the interactive television application and the initial advertisement.

Additionally, the method includes displaying, upon selection by a user, the stored interactive television application with the initial advertisement or the replacement advertisement.

Preferably, the at least one item has display boundaries, and the displaying includes displaying the stored interactive television application, and one of the following within the display boundaries of the at least one item: the initial advertisement, and the replacement advertisement.

The at least one item preferably includes at least one of the following: a game item, a background advertisement, a poster, and a product for sale.

Preferably, the initial advertisement and the replacement advertisement each includes one of the following: a video advertisement, an audio/video advertisement, and an audio-only advertisement.

The initial advertisement is preferably associated with a first sponsor and the replacement advertisement is preferably associated with a sponsor other than the first sponsor.

Preferably, the displaying includes applying parental control to displaying of at least one of: the initial advertisement, and the replacement advertisement.

The applying preferably includes displaying the replacement advertisement if a parental control parameter allows display of the replacement advertisement, and displaying the initial advertisement if the parental control parameter does not allow display of the replacement advertisement.

In accordance with still another preferred embodiment of the present invention there is also provided a method for enabling a user to order a pay television program, the method including displaying, at a user unit, an interactive magazine which includes an icon for ordering the pay television program, and enabling a user of the user unit to order the pay television program from the interactive magazine by selecting the icon.

Further in accordance with a preferred embodiment of the present invention there is provided a method for displaying alerts to a subscriber of a digital interactive television system, the method including enabling the subscriber to view a non-real-time recorded interactive television program, receiving a real-time alert relating to a real-time event, and displaying the alert.

Preferably, the displaying includes displaying the alert in an overlay overlaid on the non-real time recorded interactive television program. The alert is preferably associated with one of the following: a program determined to be of interest to the subscriber, a live program previously viewed by the subscriber, a program transmitted over a television channel determined to be of interest to the subscriber, and events of general nature.

Preferably, the method also includes displaying the real-time event in a picture-in-picture (PIP) window. The displaying preferably includes displaying the real-time event in the PIP window in response to a subscriber selection.

Additionally, the method includes displaying to the subscriber at least one highlight associated with the real-time event, and enabling the subscriber to catch up with the real-time event by fast-forwarding through the at least one highlight.

Further additionally, the method also includes enabling the user to tune to the real-time event and view a playback of the real-time event.

The transmitting preferably includes transmitting the real-time alert in response to at least one of the following: a predetermined request of the subscriber, a profile of the subscriber stored by a provider of the alert, and a determination that the subscriber has previously viewed a program to which the real-time alert is related.

In accordance with yet another preferred embodiment of the present invention there is also provided a method for displaying interactive .modules to a subscriber of a digital television system, the method including associating an interactive module with a validity tag indicating a term of validity of the interactive module, and utilizing the interactive module according to a value of the validity tag.

Preferably, the term of validity of the interactive module includes at least one of the following: valid only in a real-time application of the interactive module, valid in an application of the interactive module that is associated with a real-time clock, and valid in real-time, delayed viewing and time shifted viewing applications of the interactive module.

Further in accordance with a preferred embodiment of the present invention there is provided a method for recording interactive content that is associated with a television program, the interactive content being transmitted in advance of the television program, the method including recording the interactive content upon receipt, receiving the television program, identifying existence of recorded interactive content that is associated with the television program, and displaying at least part of the interactive content according to one of the following: together with displaying of the television program, and after displaying of the television program.

Additionally, the method also includes providing a user unit, and wherein the recording, receiving, identifying, and displaying are performed in the user unit.

Further additionally, the method also includes receiving an update of at least a portion of the recorded interactive content, and updating the at least a portion of the recorded interactive content based, at least in part, on the update.

The update may be received repeatedly, and the updating preferably includes updating the at least a portion of the recorded interactive content based, at least in part, on the update, only once. The update preferably includes an updated version of the at least a portion of the recorded interactive content.

Preferably, the interactive content includes an interactive application belonging to one of the following categories: an integrated/enhanced television category, and an opportunistic enhanced television category. Each of the categories preferably includes one of the following interactive applications: an interactive application including one of the following interactive applications: an interactive game application, an interactive shopping application, an interactive gambling application, an interactive sports-event application, an interactive application associated with statistical information, a statistical application, an information-providing interactive application, and an interactive audio/video (A/V) application, and a combined interactive application including a combination of more than one of the interactive applications.

Preferably, the identifying includes programming an intelligent agent to search for interactive information related to the television program, and employing the intelligent agent to identify the recorded interactive content.

The recording preferably includes downloading the following: the interactive content, metadata associated with the interactive content, and software required to run interactive applications included in the interactive content.

Preferably, the updating includes recording the update, and performing at least one of the following: deleting the at least a portion of the recorded interactive content, and utilizing the update instead of the at least a portion of the recorded interactive content when the at least a portion of the recorded interactive content is activated.

Alternatively, the updating includes replacing the at least a portion of the recorded interactive content with a new recorded portion based, at least in part, on the update.

There is also provided in accordance with a preferred embodiment of the present invention recording apparatus recording interactive content associated with a television program, the apparatus including a receiver receiving the television program and the interactive content associated therewith, a processor identifying at least one interactive content stream associated with the television program, and a memory recording the television program and the at least one interactive content stream, wherein the processor updates at least a portion of the at least one recorded interactive content stream based, at least in part, on an update of the at least a portion of the at least one recorded interactive content stream received by the receiver.

Further in accordance with a preferred embodiment of the present invention there is provided apparatus for recording interactive content associated with a television program, the apparatus including receiving means for receiving the television program and the interactive content associated therewith, identifying means for identifying at least one interactive content stream associated with the television program, and means for recording the television program and the at least one interactive content stream, wherein the receiving means are operative to receive an update of at least a portion of the at least one recorded interactive content stream, and the identifying means are operative to update the at least a portion of the at least one recorded interactive content stream based, at least in part, on the update.

Still in accordance with a preferred embodiment of the present invention there is provided recording apparatus recording interactive content including a stand-alone interactive application, the apparatus including: a receiver receiving the interactive content, a processor identifying at least one interactive content stream including the interactive content, and a memory recording the at least one interactive content stream, wherein the processor updates at least a portion of the at least one recorded interactive content stream based, at least in part, on an update of the at least a portion of the at least one recorded interactive content stream received by the receiver.

Further in accordance with a preferred embodiment of the present invention there is provided apparatus for recording interactive content including a stand-alone interactive application, the apparatus including receiving means for receiving the interactive content, identifying means for identifying at least one interactive content stream including the interactive content, and means for recording the at least one interactive content stream, wherein the receiving means are operative to receive an update of at least a portion of the at least one recorded interactive content stream, and the identifying means are operative to update the at least a portion of the at least one recorded interactive content stream based, at least in part, on the update.

Still further in accordance with a preferred embodiment of the present invention there is provided recording apparatus recording interactive content associated with a television program, the apparatus including a receiver receiving the television program and the interactive content associated therewith, a memory, and a processor which automatically records at least some of the interactive content associated with the television program in the memory when the television program is viewed in real time.

There is also provided in accordance with a preferred embodiment of the present invention apparatus for recording interactive content associated with a television program, the apparatus including means for receiving the television program and the interactive content associated therewith, storage means, and processing means for automatically recording at least some of the interactive content associated with the television program in the storage means when the television program is viewed in real time.

Further in accordance with yet another preferred embodiment of the present invention there is provided transmitting apparatus transmitting interactive content associated with a television program to user units that include storage devices and to user units that do not include storage devices, the apparatus including a first transmitter transmitting the television program and first interactive content associated therewith, the first interactive content being directed to both user units that include storage devices and user units that do not include storage devices, and a second transmitter transmitting second interactive content associated with the television program, the second interactive content being directed only to user units that include storage devices.

Still further in accordance with a preferred embodiment of the present invention there is provided apparatus for transmitting interactive content associated with a television program to user units that include storage devices and to user units that do not include storage devices, the apparatus including means for transmitting the television program and first interactive content associated therewith, the first interactive content being directed to both user units that include storage devices and user units that do not include storage devices, and means for transmitting second interactive content associated with the television program, the second interactive content being directed only to user units that include storage devices.

In accordance with another preferred embodiment of the present invention there is provided apparatus that prepares a television program in a form suitable for viewing of highlights on a basis of segmentation information, the apparatus including a transmitter transmitting segmentation information associated with one of the following: at least one part of the television program, and at least one transmitted part of the television program that has already been recorded at a user unit, and a processor enabling, upon a selection by a user, display of one of the following: at least one segmented part of the television program, and at least one segmented transmitted part of the television program that has already been recorded at a user unit

Further, there is provided, in accordance with a preferred embodiment of the present invention, apparatus for preparing a television program in a form suitable for viewing of highlights on a basis of segmentation information, the apparatus including means for transmitting segmentation information associated with one of the following: at least one part of the television program, and at least one transmitted part of the television program that has already been recorded at a user unit, and means for enabling, upon a selection by a user, display of one of the following: at least one segmented part of the television program, and at least one segmented transmitted part of the television program that has already been recorded at a user unit.

Further in accordance with a preferred embodiment of the present invention there is provided apparatus that enables viewing of highlights of a television program, the apparatus including a highlight metadata generator that defines at least one highlight of the television program, a transmitter transmitting the television program in association with the highlight metadata, and a processor enabling, upon a selection by a user, display of at least one part of the television program that is associated with the at least one highlight

Still in accordance with a preferred embodiment of the present invention there is provided apparatus for enabling viewing of highlights of a television program, the apparatus including means for generating highlight metadata that defines at least one highlight of the television program, means for transmitting the television program in association with the highlight metadata, and means for enabling, upon a selection by a user, display of at least one part of the television program that is associated with the at least one highlight.

Further in accordance with a preferred embodiment of the present invention there is provided apparatus that displays advertisements associated with at least one item of an interactive television application, the apparatus including a transmitter transmitting an interactive television application including the at least one item, the interactive television application having an advertising slot adapted to be associated with an advertisement associated with the at least one item, a memory that stores the interactive television application, and a processor associating the advertising slot with a replacement advertisement transmitted by the transmitter.

There is also provided in accordance with a preferred embodiment of the present invention apparatus for displaying advertisements associated with at least one item of an interactive television application, the apparatus including means for transmitting an interactive television application including the at least one item, the interactive television application having an advertising slot adapted to be associated with an advertisement associated with the at least one item, means for storing the interactive television application, means for transmitting a replacement advertisement, and means for associating the advertising slot with the replacement advertisement.

Further in accordance with a preferred embodiment of the present invention there is provided apparatus that displays advertisements associated with at least one item of an interactive television application, the apparatus including a receiver receiving an interactive television application including the at least one item, the interactive television application having an advertising slot adapted to be associated with an advertisement associated with the at least one item, a memory that stores the interactive television application, a processor associating the advertising slot with a replacement advertisement received at the receiver.

Still in accordance with a preferred embodiment of the present invention there is provided apparatus for displaying advertisements associated with at least one item of an interactive television application, the apparatus including means for receiving an interactive television application including the at least one item, the interactive television application having an advertising slot adapted to be associated with an advertisement associated with the at least one item, means for storing the interactive television application, means for receiving a replacement advertisement, and means for associating the advertising slot with the replacement advertisement

There is also provided in accordance with a preferred embodiment of the present invention a user unit that enables a user to order a pay television program, the user unit including a display displaying an interactive magazine which includes an icon for ordering the pay television program, and a processor enabling the user to order the pay television program from the interactive magazine by selecting the icon.

Further in accordance with a preferred embodiment of the present invention there is provided apparatus at a user unit for enabling a user to order a pay television program, the apparatus including means for displaying an interactive magazine which includes an icon for ordering the pay television program, and means for enabling the user of the user unit to order the pay television program from the interactive magazine by selecting the icon.

There is also provided in accordance with a preferred embodiment of the present invention apparatus that displays alerts to a subscriber of a digital interactive television system, the apparatus including a processor enabling the subscriber to view a non-real-time recorded interactive television program, a receiver receiving a real-time alert relating to a real-time event, and a display displaying the alert.

Further in accordance with a preferred embodiment of the present invention there is provided apparatus for displaying alerts to a subscriber of a digital interactive television system, the apparatus including means for enabling the subscriber to view a non-real-time recorded interactive television program, means for receiving a real-time alert relating to a real-time event, and means for displaying the alert.

Still in accordance with a preferred embodiment of the present invention there is provided apparatus that displays interactive modules to a subscriber of a digital television system, the apparatus including a tagging unit associating an interactive module with a validity tag indicating a term of validity of the interactive module, and a processor utilizing the interactive module according to a value of the validity tag.

Still further in accordance with a preferred embodiment of the present invention there is provided apparatus for displaying interactive modules to a subscriber of a digital television system, the apparatus including means for associating an interactive module with a validity tag indicating a term of validity of the interactive module, and means for utilizing the interactive module according to a value of the validity tag.

There is also provided in accordance with a preferred embodiment of the present invention recording apparatus recording interactive content that is associated with a television program, the interactive content being transmitted in advance of the television program, the apparatus including a memory that records the interactive content upon receipt, a receiver receiving the television program, a processor identifying existence of recorded interactive content that is associated with the television program, and a display displaying at least part of the interactive content according to one of the following: together with displaying of the television program, and after displaying of the television program.

Further in accordance with a preferred embodiment of the present invention there is provided apparatus for recording interactive content that is associated with a television program, the interactive content being transmitted in advance of the television program, the apparatus including means for recording the interactive content upon receipt, means for receiving the television program, means for identifying existence of recorded interactive content that is associated with the television program, and means for displaying at least part of the interactive content according to one of the following: together with displaying of the television program, and after displaying of the television program.

### BRIEF DESCRIPTION OF THE DRAWINGS

The present invention will be understood and appreciated more fully from the following detailed description, taken in conjunction with the drawings in which:
Fig. 1 is a simplified partly pictorial, partly block diagram illustration of a preferred implementation of an interactive digital television system constructed and operative in accordance with a preferred embodiment of the present invention;
Fig. 2 is a simplified block diagram illustration of a preferred implementation of a headend in the interactive digital television system of Fig. 1;
Fig. 3 is a simplified block diagram illustration of a preferred implementation of a set-top box (STB) in a user unit in the interactive digital television system of Fig. 1;
Fig. 4 is a simplified pictorial illustration showing an interactive television application during recording and having available and unavailable interactive content components;
Fig. 5 is a simplified pictorial illustration of an interactive television application of a game card having interchangeable advertisements;
Fig. 6 is a simplified pictorial illustration of an interactive television application of a shopping show having interchangeable advertisements;
Fig. 7 is a simplified pictorial illustration of an interactive television application including an interactive magazine that enables selection of a pay television program by selecting an icon;
Fig. 8 is a simplified pictorial illustration of an interactive television application that provides real-time alerts relating to real-time events when a non-real time recorded interactive television program is displayed;
Fig. 9 is a simplified flowchart illustration of a preferred method of operation of the apparatus of Figs. 1 - 3;
Fig. 10 is a simplified flowchart illustration of another preferred method of operation of the apparatus of Figs. 1 - 3;
Fig. 11 is a simplified flowchart illustration of yet another preferred method of operation of the apparatus of Figs. 1 - 3;
Fig. 12 is a simplified flowchart illustration of still another preferred method of operation of the apparatus of Figs. 1 - 3;
Fig. 13 is a simplified flowchart illustration of yet another preferred method of operation of the apparatus of Figs. 1 - 3;
Fig. 14 is a simplified flowchart illustration of still another preferred method of operation of the apparatus of Figs. 1 - 3;
Fig. 15 is a simplified flowchart illustration of another preferred method of operation of the apparatus of Figs. 1 - 3;
Fig. 16 is a simplified flowchart illustration of still another preferred method of operation of the apparatus of Figs. 1 - 3;
Fig. 17 is a simplified flowchart illustration of yet another preferred method of operation of the apparatus of Figs. 1 - 3; and
Fig. 18 is a simplified flowchart illustration of still another preferred method of operation of the apparatus of Figs. 1 - 3.

### DETAILED DESCRIPTION OF A PREFERRED EMBODIMENT

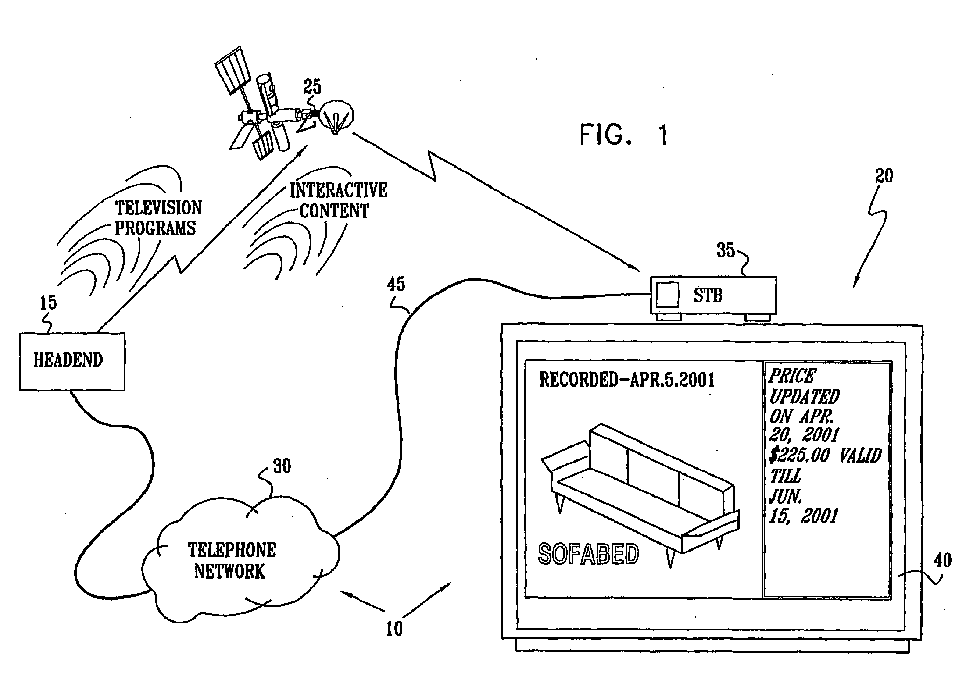

Reference is now made to Fig. 1, which is a simplified pictorial illustration of an interactive digital television system 10 constructed and operative in accordance with a preferred embodiment of the present invention.

The interactive digital television system 10 preferably includes a headend 15 that transmits both television programs, preferably including pay television programs, and interactive content to a plurality, typically a multiplicity, of user units 20 via appropriate infrastructure. Alternatively, the television programs and interactive content may be distributed from separate headends (not shown). It is believed that using a single headend 15 is preferable because at least some of the interactive content is preferably associated with the television programs, and using a single headend 15 is therefore believed to be preferred for reasons of simplicity.

The infrastructure may include any appropriate combination of coaxial cables, satellite, telephone wires, fiber optic cables, cellular infrastructure, and wireless infrastructure, or any other suitable infrastructure. The television system 10 may preferably be implemented by any combination of network configurations such as a digital terrestrial television network, a cellular network, and a multicast or unicast computer network (all not shown). The computer network may be implemented by any appropriate network or combination thereof well-known in the art, such as, for example, at least one of the following: a local-area-network (LAN); a metropolitan-area-network (MAN); and a wide-area-network (WAN).

It is appreciated that the present invention is not limited by the type of infrastructure used in the system 10, and/or the network configuration of the system 10, and/or by the type of communicating termini in the system 10.

By way of example, the system 10 in Fig. 1 may be implemented by infrastructure that includes a satellite 25 for communicating the television programs and at least part of the interactive content from the headend 15 to the user units 20, and a telephone network 30 for providing a return path to the user units 20 for communication of information, including information·inputted by the users of the user units 20, to the headend 15. The telephone network 30 may also be used for communicating part of the interactive content from the headend 15 to the user units 20. The telephone network 30 may include, for example, at least one of the following: a public switched telephone network (PSTN); a private telephone network; and a cellular network.

For simplicity of depiction and description and without limiting the generality of the foregoing, only one of the plurality of user units 20 is shown in Fig. 1.

The interactive content transmitted throughout the system 10 preferably includes interactive applications and information for use with interactive applications, both of which may be transmitted from the headend 15 to the user units 20 and from the user units 20, including from users of the user units 20, to the headend 15.

Preferably, each user unit 20 includes a set-top box (STB) 35 and a display 40, such as a television display, for displaying the television programs and the interactive content Alternatively, the STB 35 and the display 40 may be replaced by a television including STB functionality (not shown) or by a computer having a display and electronic cards with STB functionality (not shown). The STB 35 is preferably operative to receive transmissions from the headend 15 typically via coaxial cables, wires or an antenna (all not shown).

The STB 35 may also preferably be operative to communicate with the headend 15 in two-way communication via the telephone network 30 and telephone wires 45; in such a case the STB 35 may receive from the headend 15, for example, interactive content and interactive television management information, and transmit to the headend 15 user generated information such as, for example, at least one of the following: a request to receive information related to an interactive application; an order for an item, a product or a service offered in an interactive application; an order for a television program, or a portion thereof, that is associated with an interactive application; and a response to a poll or a query presented in an interactive application.

It is appreciated that a subcombination of the elements of the system of Fig. 1, comprising the user unit 20 and not comprising the other illustrated elements of Fig. 1, comprises an alternative embodiment of the present invention.

The operation of the system of Fig. 1 is now briefly described.

In a preferred embodiment of the present invention, interactive content and a television program are transmitted from the headend 15 to the user unit 20. The interactive content may be associated with the television program or may be unrelated thereto.

In a case where the interactive content is associated with the television program, at least one interactive content stream that is associated with the television program is preferably identified at the user unit 20. Then, the television program and the at least one interactive content stream are preferably recorded in the user unit 20. The at least one interactive content stream, metadata corresponding to the at least one interactive content stream, and software required to run interactive applications comprised in the at least one interactive content stream are preferably downloaded to the user unit 20.

The term "metadata" is used throughout the specification and claims to include information descriptive of or otherwise referring to an interactive content stream. The information referring to the interactive content stream may include, for example, pointers and indexing information. In the case where the interactive content stream is associated with at least one television program, the pointers and indexing information may point to and index segments of the at least one television program and portions of the interactive content stream. It is appreciated that the contents of the metadata may preferably pertain to either a plurality of users or an individual user. The metadata may be used to enable operations on the at least one television program, if associated with the interactive content stream, and/or on interactive content in the interactive content stream. The operations may include selection of segments, versions, scenes or portions from the at least one television program and/or the interactive content and targeting operations which address an individual user or a plurality of users by employing, for example, personal characteristics of the user or the plurality of users respectively. For example, metadata may include tags that point at locations in a program, tags that are used for accessing selection menus, identification tags of audio and/or video segments, identification tags of items of interactive content, version tags indicating when at least a portion of the interactive content, or other data in the broadcast digital stream, has changed, scenes within a program where a commercial should be played, data related to advertisements associated with the program, data to be included in banners, overlays to be presented to a user or a predetermined group of users, and so forth.

As described in detail below, the system 10 preferably enables, inter alia, matching of interactive applications and / or data for use with interactive applications to television programs that are digitally recorded at the user units 20 and viewed in a time-shifted mode; a time shift may comprise, for example, a shift of a few minutes, hours, or days after the television programs have been broadcast. By way of example, Fig. 1 shows a recorded shopping application in which a price of a product offered for sale is updated to a date when the shopping application is actually viewed.

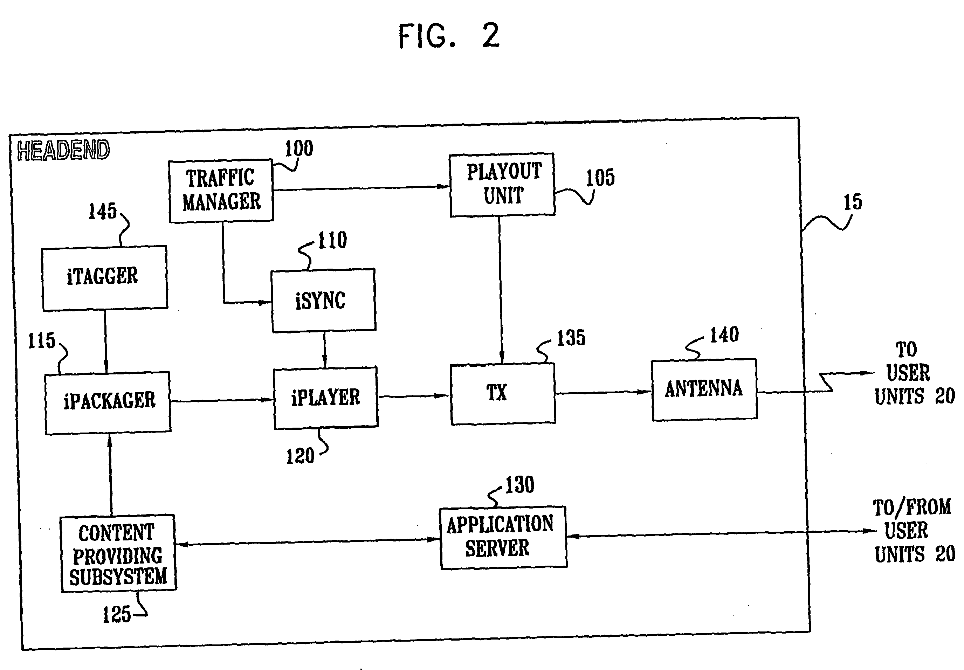

Reference is now additionally made to Fig. 2, which is a simplified block diagram illustration of a preferred implementation of the headend 15 in the interactive digital television system 10 of Fig. 1.

The headend 15 preferably includes the following elements: a traffic manager 100; a playout unit 105; a program synchronization unit (iSync) 110; a packager unit (iPackager) 115; a player unit (iPlayer) 120; a content providing subsystem 125; an application server 130; a transmitter (Tx) 135; a transmitting antenna 140; and a tagging unit (iTagger) 145. Each of the elements 100, 110, 115, 120, and 125 may be implemented in software or in hardware or alternatively in a combination of software and hardware. The hardware and software may be comprised, for example, in a computer system, such as a conventional personal computer (PC) that is commercially available from a plurality of vendors. It is appreciated that at least some of the elements of the headend 15 may be managed by a headend operator terminal (not shown) as is well known in the art.

The playout unit 105 is preferably operatively associated with the transmitter 135 and the traffic manager 100 and is operative to receive control information from the traffic manager 100 and to provide to the transmitter 135 television programs for transmission to the user units 20 of Fig. 1 in response to the control information.

The content providing subsystem 125 is preferably operative to provide interactive content, intended for transmission to the user units 20 of Fig. 1, to the iPackager 115, either in response to queries received from users or in accordance with instructions programmed by an operator (not shown) of the headend 15.

The iTagger 145 preferably produces tags and other metadata relating to the interactive content. The iPackager 115 preferably receives tagging information and other metadata information from the iTagger 145, assigns the tagging information and the other metadata information to the interactive content, and outputs tagged interactive content to the iPlayer 120.

The iPlayer 120 preferably provides the tagged interactive content to the transmitter 135 under control of the iSync 110, which is preferably operative to synchronize the interactive content with the television programs in response to control information received from the traffic manager 100.

It is appreciated that the interactive content may include stand-alone applications that are not associated with the television programs, in addition to applications that are associated with the television programs. Nevertheless, transmission of all the interactive content and the television programs is most preferably arranged by the iSync 110 under control of the traffic manager 100 in order to synchronize the interactive content with the television programs, if they are associated. The transmission streams therefore preferably include a combination of interactive content and television programs that may be linked, but are not necessarily linked.

Preferably, the transmitter 135 transmits the transmission streams to the user units 20 of Fig. 1 via the antenna 140. It is appreciated that the transmitter 135 may preferably transmit the transmission streams in one of the Motion Picture Expert Group (MPEG) formats that are well known in the art, or in any other suitable format.

The content providing subsystem 125 may alternatively or additionally provide interactive content to the application server 130, which is preferably operative to transmit the interactive content provided by the content providing subsystem 125 to the user units 20 of Fig. 1, for example via the telephone network 30 of Fig. 1, or via a cable channel if the system 10 is a cable based system rather than a satellite based system. The application server 130 is additionally operative to receive from the user units 20 the user generated information as mentioned above with reference to Fig. 1, and to provide the user generated information to the content providing subsystem 125 for processing thereby.

It is appreciated that the television programs and the interactive content may be transmitted to the user units 20 of Fig. 1 either in a clear form or in a secured form, such as in scrambled or encrypted form. In a case where the television programs and the interactive content are to be transmitted to the user units 20 of Fig. 1 in a secured form, the headend 15 may also preferably include an encryptor (not shown) that may be operatively associated with the transmitter 135 and operative to encrypt the television programs and the interactive content prior to transmission of the television programs and the interactive content to the user units 20 of Fig. 1.

The terms "encrypt" and "decrypt" in all of their grammatical forms are used throughout the specification and claims to include any appropriate type of information encryption/decryption ranging from simple scrambling/descrambling to hard encryption/decryption.

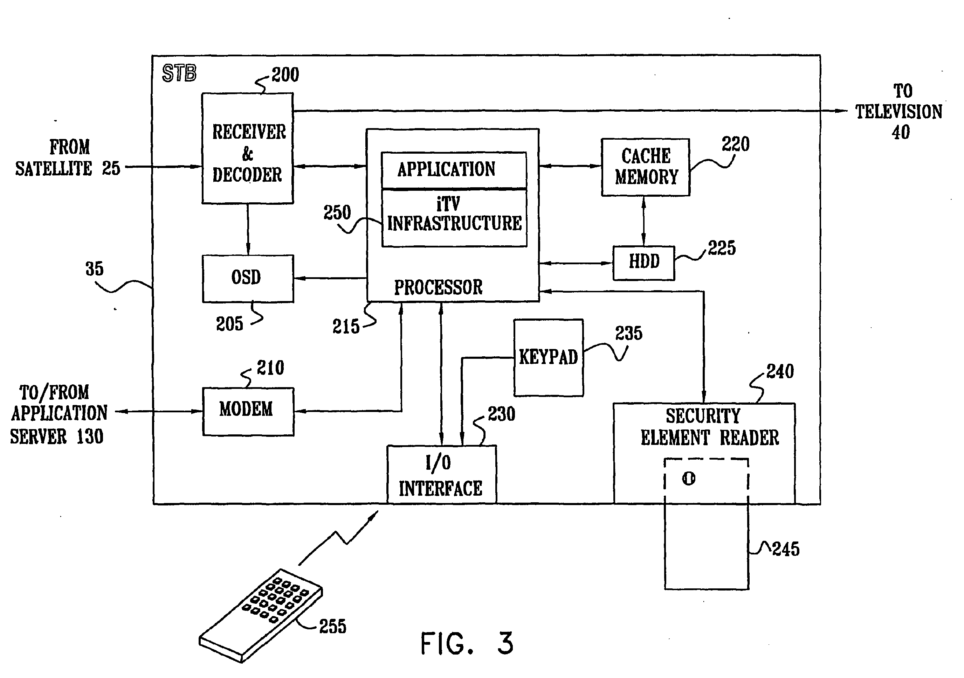

Reference is now additionally made to Fig. 3 which is a simplified block diagram illustration of a preferred implementation of the STB 35 in the user unit 20 in the interactive digital television system 10 of Fig. 1.

Preferably, the STB 35 includes the following elements: a multi-channel receiver and decoder 200; an on-screen display (OSD) unit 205; a modem 210; a processor 215; a cache memory 220; a high capacity memory, such as a hard disk-drive (HDD) 225; an input/output (I/O) interface 230; a keypad 235; and a removable security element reader 240 that may access a removable security element, such as a smart card 245, and read data from and/or write data to the smart card 245.

The receiver and decoder 200 is preferably operative to receive and decode television programs and interactive content provided by the headend 15 of Figs. 1 and 2 and to display decoded television programs and decoded interactive applications on the television 40 of Fig. 1.

In a case where the television programs and the interactive content are provided in an encrypted form, the receiver and decoder 200 may also preferably include a decrypter (not shown) which is operative to decrypt the television programs and the interactive content by using control words (CWs) generated in the smart card 245 in accordance with entitlements of a user, typically a subscriber, of the STB 35 as is well known in the art and described, for example, in US Patents 5,282,249 and 5,481,609 to Cohen et al, the disclosures of which are hereby incorporated herein by reference. The CWs generated in the smart card 245 are preferably provided to the receiver and decoder 200 via the security element reader 240 and the processor 215.

It is appreciated that the entitlements of the user may include separate entitlements for viewing television programs and for the interactive content. Alternatively, the entitlements of the user may include unified entitlements for viewing television programs and for all the interactive content Further alternatively, the entitlements of the user may include unified entitlements for viewing television programs and for interactive content associated with the television programs, and separate entitlements for stand-alone interactive content

Preferably, the receiver and decoder 200 provides clear interactive content to the processor 215. The processor 215 is preferably operative, by employing an interactive television (TV) infrastructure 250, to process clear interactive content and to program, as necessary, the OSD 205 for displaying interactive information on the television 40. It is appreciated that the OSD 205 is preferably operative to display any appropriate type of interactive information including, but not limited to, text, graphics, video and audio, all in any appropriate format in which the interactive information is received, such as MPEG-2, MPEG-4, MHEG, etc.

The interactive TV infrastructure 250 may preferably run on a platform of a conventional interactive television infrastructure, such as the Value@TV commercially available from NDS Ltd. of Staines Middlesex, UK and described, for example, in the World Wide Web site:
http://www.nds.com/solutions/value_at_tv.html, the disclosure of which is hereby incorporated herein by reference.

The processor 215 may also be operative to store encrypted or decrypted interactive content and television programs in the cache memory 220 and the HDD 225 in accordance with at least one of the following:
selections of a user of the STB 35;
instructions received from a software program or the equivalent operating as an intelligent agent for the user (not shown), one example of an appropriate intelligent agent being described in the above-referenced US Patent application 09/242,871 of Maissel et al and corresponding applications, incorporated herein by reference, which intelligent agent may be resident in the processor 215; and
instructions embedded in the interactive content.

The user may provide selections and interactive inputs to the processor 215 via the I/O interface 230 by employing a remote control 255, by using the keypad 235, or by employing any other suitable input device, such as a pointing device or a mouse (not shown). Preferably, the selections and the interactive inputs of the user are provided by the processor 215, after processing thereof, to the modem 210 for transmission via the telephone network 30 of Fig. 1 to the application server 130 of Fig. 2.

The operation of the apparatus of Figs. 1 - 3 is now further briefly described.

In a preferred embodiment of the present invention, interactive content associated with a television program is transmitted from the headend 15 to the user unit 20. The interactive content is preferably embedded in at least one interactive content stream and transmission of the television program and the interactive content may be simultaneous. Alternatively, the interactive content may be transmitted before or after transmission of the television program.

At the user unit 20, at least one interactive content stream that is associated with the television program is preferably identified, preferably as described below. Then, the television program and the at least one interactive content stream are preferably recorded, for example by recording the television program in the HDD 225 in the user unit 20 and downloading, to the HDD 225, the at least one interactive content stream and software required to run interactive applications comprised in the at least one interactive content stream. It is appreciated that the interactive stream may be processed before recording; for the sake of simplicity of description and without limiting the generality of the foregoing, recording of the interactive stream without prior processing is described herein.

When an update of at least a portion of the at least one recorded interactive content stream is generated, the update is preferably transmitted to the user unit 20, and the at least a portion of the at least one recorded interactive content stream at the user unit 20 is updated based, at least in part, on the transmitted update. It is appreciated that the update may include an updated version of the at least a portion of the at least one recorded interactive content stream. Thus, when the at least a portion of the at least one recorded interactive content, stream is used by the user, the updated version is displayed to the user instead of a non-updated irrelevant version of the at least one recorded interactive content stream.

Typically, the interactive content is transmitted repeatedly by the headend 15, and is therefore typically repeatedly received. In such a case, the at least one interactive content stream is preferably recorded only once. It is appreciated that the update may also be transmitted repeatedly, and therefore updating of the at least a portion of the at least one recorded interactive content stream is preferably performed only once for each new update.

Preferably, avoiding recording of the interactive content and the update more than once may be performed by keeping track of version numbers of the interactive content and the update. The processor 215 may preferably check the version number of each piece of the interactive content and of the update, and record only new versions of each piece of the interactive content and the update.

Preferably, recording in the user unit 20 of any portion of the interactive content stream and/or update thereof is performed based on a selection made, separately or in combination, by at least one of the following: the user; a provider of the interactive content; a provider of the television program; a provider of a telecommunication service via which the interactive content is provided; and a provider of a telecommunication service via which the television program is provided.

It is appreciated that the interactive content stream may preferably include an interactive application. The interactive application may preferably include an interactive application of at least one of the following categories: stand-alone; integrated/enhanced television; and opportunistic enhanced television. The preceding list of interactive applications is given by way of example only, and is not meant to be limiting.

An example of an interactive application in the stand-alone category is a shopping mall application in which items are offered for sale. The shopping mall application may be provided over a virtual channel and may be unrelated to television programs.

The integrated/enhanced television category preferably includes interactive applications that support television (TV) programs, such as TV programs displaying sports games and game shows. Preferably, interactive applications in the integrated/enhanced television category are synchronized with television programs to which the interactive applications relate.

The opportunistic enhanced television category preferably includes interactive applications that may accompany television programs but are not directly related to the television programs. An example of an interactive application in the opportunistic enhanced television category is stock-tickers that are displayed over news headlines and selected interactively.

Preferably, each of the categories mentioned above may include various types of interactive applications such as one of the following: an interactive game application; an interactive shopping application; an interactive gambling application; an interactive sports-event application; an interactive application associated with statistical information; a statistical application; an information providing interactive application; and an interactive audio/video (A/V) application. Alternatively or additionally, each of the categories may include a combined interactive application including a combination of more than one of the interactive applications mentioned above.

Preferably, identification of the at least one interactive content stream that is associated with the television program is performed by the processor 215 analyzing metadata associated with the interactive content stream. Alternatively or additionally, identification of the at least one interactive content stream may be performed by programming an intelligent agent to search for interactive information related to the television program, and employing the intelligent agent to identify the at least one interactive content stream associated with the television program. Preferably, the interactive information related to the television program and the television program may have some common elements of metadata, and therefore the intelligent agent may use similar metadata element searching tools to find metadata identifying the interactive information that is related to the television program. The at least one interactive content stream in which the metadata is found can then preferably be derived by the intelligent agent or an equivalent software program from metadata elements that identify the at least one interactive content stream.

Further alternatively, the intelligent agent may employ MPEG service information (SI) which defines both video portions of the television program and data parts of the at least one interactive content stream in order to identify the at least one interactive content stream.

In a case where the headend 15 transmits to the user unit 20 interactive content that includes a stand-alone interactive application that is not related to any television program, the interactive content may be received at the user unit 20, and at least one interactive content stream including the interactive content may be identified. Then, the at least one interactive content stream may be recorded, and when an update of at least a portion of the at least one recorded interactive content stream is received, the at least a portion of the at least one recorded interactive content stream may be updated based, at least in part, on the update.

Preferably, using the transmitted update at the user unit 20 may be performed by deleting the recorded portion of the at least one interactive content stream and recording the update instead. Alternatively, the transmitted update mary be recorded without deleting the recorded portion of the at least one interactive content stream, and when the portion of the at least one interactive content stream is activated, the update is preferably utilized instead of the recorded portion of the at least one interactive content stream.

It is appreciated that decisions regarding operations to be performed on the recorded portion of the at least one interactive content stream and the update, such as, for example, deleting the recorded portion of the at least one interactive content stream and utilizing the update instead of the recorded portion of the at least one interactive content stream, may preferably be performed according to tags and data embedded in metadata associated with the interactive content, such as, for example, version tags indicating existence of new versions of the recorded portion of the at least one interactive content stream,.

Alternatively or additionally, each piece of interactive content and each version of a piece of interactive content may be placed as a separate file in a directory. Operations on each piece of the interactive content may preferably be performed by applying logical operations on version numbers, such as the following operation: "Delete versions whose version numbers are less than 3".

The metadata associated with the interactive content may alternatively or additionally include tags and data specifying times at which to carry out the operations to be performed on the recorded portion of the at least one interactive content stream and the update. For example, the metadata may include data that specifies that the recorded portion of the at least one interactive content stream can be used until a specific time elapses or a selection of the user is performed, and the update must be used afterwards.

In a preferred embodiment of the present invention, the update may be encrypted and transmitted in an encrypted form to the user unit 20. In such a case, the update may be decrypted to obtain a decrypted update, and then the decrypted update can be utilized, such as by displaying the decrypted update.

In accordance with another preferred embodiment of the present invention, interactive content associated with a television program is transmitted from the headend 15 to the user unit 20. At the user unit 20, the television program and the interactive content associated therewith are received, and at least some of the interactive content associated with the television program is preferably automatically recorded when the television program is viewed in real-time.

Thus, when the user starts viewing the television program in real-time, this viewing of the television program in real-time, not necessarily from the beginning of the program, triggers recording of the at least some of the interactive content associated with the television program. The instant when a user of the user unit 20 starts viewing the program becomes a starting time of a first recording period during which first recording of components of the interactive content begins.

It is appreciated that even if the user views the television program in real-time for a short time period, for example 30 seconds, and then tunes to a different program or performs navigation operations to scan or view other programs, the recording of the components of the interactive content preferably still continues, so that, when the user returns to the television program, some components of the interactive content will be already recorded. Such recording may, for example, be carried out into the cache memory 220. If the user switches to viewing pre-recorded material after viewing the television program in real-time, all the interactive content pertaining to the television program is preferably recorded.

Preferably, the interactive content includes a plurality of separate components; automatically recording the at least some of the interactive content associated with the television program preferably includes selectively automatically recording discrete complete components of the plurality of separate components.

For example, in a case where the television program includes a cooking show, the interactive content may include at least one of the following components that may each be separately recorded: at least one recipe; nutritional information relating to at least one recipe; at least one video clip related to at least one recipe; audio information related to at least one recipe; and an offer to purchase an item.

In a case where the television program includes a sports program, the interactive content may include, for example, at least one of the following components that may each be separately recorded: statistics information relating to at least one athlete, team or league; statistics information relating to at least one sports activity; personal details of at least one athlete; at least one video clip related to at least one athlete, a team, or a league; audio information related to at least one athlete, a team, or a league; textual information related to at least one athlete, team or league; multimedia information related to at least one athlete, a team, or a league; and an offer to purchase an item.

Preferably, during the first recording period, performance of interactive operations on interactive content currently being recorded is disabled. At the end of the first recording period, interactive operations on interactive content recorded during the first recording period are preferably enabled. It is appreciated that performance of interactive operations on any component of interactive content being recorded is disabled at least until termination of recording of the component, in order to provide proper operation of the component, which typically is possible only when the component is fully recorded.

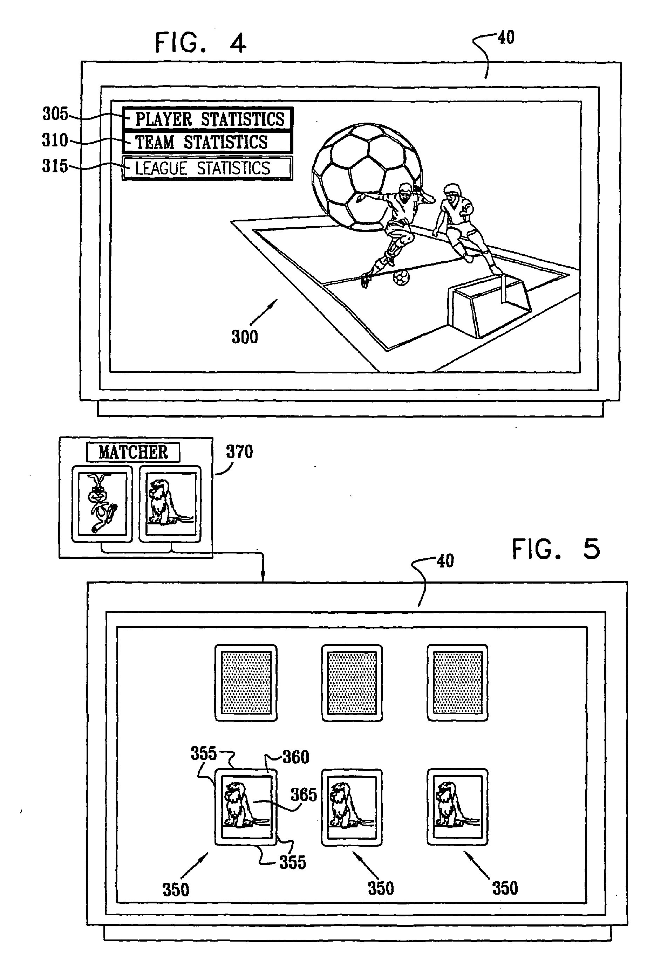

In an example shown in Fig. 4, a component of interactive content referring to statistics of players of a displayed sport game 300 and a component of interactive content referring to statistics of a team in which the players play have already been recorded, whereas recording of a component of interactive content referring to statistics of a league in which the team plays has not yet been completed. Therefore, an icon 305 that enables interactive operations on players statistics and an icon 310 that enables interactive operations on team statistics are marked as available, whereas an icon 315 that enables interactive operations on league statistics is marked as unavailable.

It is appreciated that marking operations unavailable in a user interface is well known in the art and is provided, for example, in Windows^{™} by Microsoft^{™} Corporation. Preferably, the marking as unavailable includes marking as unavailable at least one of the following: at least one icon used for at least one interactive operation; and at least one field used for at least one interactive operation. One particular non-limiting example of marking as unavailable may comprise displaying a field or icon as "dim" or "gray", as compared to other displayed fields or icons, as is well known in the art.

In accordance with another preferred embodiment of the present invention, interactive content associated with a television program may be transmitted from the headend 15 to user units 20 of different types, for example, user units 20 in which the STB 35 includes the high capacity HDD 225, and user units 20 in which the STB 35 does not include the HDD 225. In such a case, a transmission stream transmitted from the headend 15 to the user units 20 may preferably include the following: the television program; first interactive content that is directed to both user units 20 in which the STB 35 includes the HDD 225 and user units 20 in which the STB 35 does not include the HDD 225; and second interactive content directed only to user units 20 in which the STB 35 includes the HDD 225. The first interactive content and the second interactive content are typically not identical.

It is appreciated that the first interactive content is preferably sufficient to be displayed in real-time but also useful for recording in the HDD 225. The second interactive content is not useful for a STB 35 that is limited to real-time applications and does not include the HDD 225.

Further in accordance with a preferred embodiment of the present invention a television program may be prepared at the headend 15 in a form suitable for viewing of highlights on a basis of segmentation information. In such a case, the headend 15 may preferably transmit segmentation information associated with one of the following: at least one part of the television program; and at least one transmitted part of the television program that has already been recorded at the user unit 20. Parts of the television program that may preferably be segmented may include, for example, items or stories as described, for example, in US Patent application 09/515,118 to Wachtfogel et al and corresponding published PCT Application WO 00/01149, the disclosures of which have been incorporated herein by reference.

Transmission of the segmentation information associated with at least one part of the television program is preferably performed before transmission of the television program if the television program is prerecorded at the headend 15, or during real-time transmission of the television program. It is appreciated that in a case where the segmentation information is transmitted during real-time transmission of the television program, transmission of the segmentation information may be delayed by a short delay, such as a few seconds, with respect to the real-time transmission of the television program or, alternatively, the segmentation information may be transmitted after transmission of the television program, such as, for example, shortly after transmission of the television program.

Preferably, the segmentation information includes at least one of the following: a highlight identifier, a segment identifier; and a playtime pointer. The highlight identifier may include a position of the highlight, an identifying name or number of the highlight and other identifying information. The segment identifier may include a position of the segment, an identifying name or number of the segment and other identifying information. The playtime pointer may include information identifying a specific time within display of a recorded program or event at which the highlight is to be displayed. It is appreciated that the segmentation information may also include additional segment defining parameters that are enabled by television program metadata.

Preferably, upon a selection by a user, the user unit 20 may enable display of one of the following: at least one segmented part of the television program; and at least one segmented transmitted part of the television program that has already been recorded at the user unit 20.

Viewing of highlights of a television program may alternatively be enabled by generating highlight metadata that defines at least one highlight of the television program prior to transmission of the television program to users. Prior to generating the highlight metadata, the at least one highlight is preferably identified, and the highlight metadata is preferably prepared based on the at least one highlight identified. The television program may then be transmitted in association with the highlight metadata to the user unit 20 where, upon a selection by the user, display of the at least one part of the television program that is associated with the at least one highlight is enabled.

Preferably, the user may identify a series of television programs that are of interest to the user by using any appropriate method such as, for example, by explicitly specifying a series of television programs or by using an intelligent agent that is resident in the processor 215 at the STB 35. It is appreciated that, further alternatively, the series of television programs may be identified at the headend 15 based on viewing habits of the user. Preferably, once the series of television programs is identified, highlights of all television programs in the series may be stored in the HDD 225 at the STB 35 as a highlight album.

Preferably, storage of the highlight album may be performed by associating at least one of the following with a highlight transition module: a highlight; and a set of highlights of a television program. The term "highlight transition module" is used throughout the present specification and claims to include a module indicating transition from displaying of a highlight to displaying of another highlight. The highlight transition module may preferably include at least one of the following: an advertisement; a still image or a set of still images; a module of audio effects; a module of visual effects; and a module of audio/visual effects.

Each highlight transition module is then preferably stored in addition to the stored highlights of all television programs in the series, and, when the user activates displaying of the highlight album, each highlight transition module is preferably displayed either before or after displaying one of the following: the highlight; and the set of highlights of the television program. It is appreciated that the highlight information, each highlight transition module, and the television program may each have separate transmission metadata segmentation.

The term "advertisement" is used throughout the present specification and claims to include any appropriate form of information that is used to promote sale of an item, a product, or a service. An advertisement may thus include, for example, any one or more of the following, either separately or in any appropriate combination: a video clip; a still image; and audio such as, for example, audio associated with a video clip and/or a still image.

The series of television programs may preferably include, for example, at least one of the following: a series of games; a series of games played during a selected time period; a series of television programs related to a selected topic; and a series of television programs related to a selected topic and played during a selected time period.

In accordance with another preferred embodiment of the present invention, interchangeable advertisements associated with at least one item of an interactive television application may be displayed at the user unit 20. Preferably, an interactive television application including the at least one item may be transmitted to the user unit 20. The interactive television application preferably includes an advertising slot adapted to be associated with an advertisement associated with the at least one item. The interactive television application is then stored at the user unit 20.

It is appreciated that association of the advertising slot with the advertisement may preferably be performed based upon one of the following criteria:
1. a time synchronization between the advertising slot and the advertisement; that is, reception of the advertisement at the user unit 20 occurs when the advertising slot is activated for display at the user unit 20;
2. a predetermined time difference between the advertising slot and the advertisement; that is, reception of the advertisement precedes a time when the advertising slot is activated for display at the user unit 20 by a predetermined time difference; and
3. correspondence of the advertisement to an application in which the advertising slot is activated for display at the user unit 20; that is, any appropriate type of relationship between the advertisement and the application within which the advertising slot is activated.

Preferably, at a later time, or, for example, periodically, a replacement advertisement may be transmitted to the user unit 20. In response to transmission of the replacement advertisement, the advertising slot is preferably associated with the replacement advertisement instead of being associated with the advertisement with which the advertising slot was formerly associated.

It is appreciated that an initial advertisement may be transmitted substantially simultaneously with the interactive television application. In such a case, the interactive television application and the initial advertisement may both be stored in the HDD 225.

Preferably, the stored interactive television application may be displayed together with the initial advertisement or together with the replacement advertisement depending on a selection made by the user or by a provider of one of: the initial advertisement; and the replacement advertisement.

It is appreciated that the at least one item may have display boundaries, and thus when the stored interactive television application is displayed with the initial advertisement or the replacement advertisement, the initial advertisement or the replacement advertisement are preferably displayed within the display boundaries of the at least one item.

Fig. 5 depicts an example of a case where the at least one item includes a game item, such as a game card 350. The game card 350 preferably includes display boundaries 355, and when the back of the card 360 is displayed, the back of the card 360 may preferably include an interchangeable advertisement 365. Display of the interchangeable advertisement is preferably determined by a matcher 370 that may preferably be implemented in software or hardware and may be resident in the processor 215. For example, the matcher 370 may determine displaying of an advertisement in response to a payment received from a sponsor thereof Thus, a user playing a game with the game card 350 is preferably exposed to one or to a plurality of different advertisements while playing the game, as determined by the matcher 370.

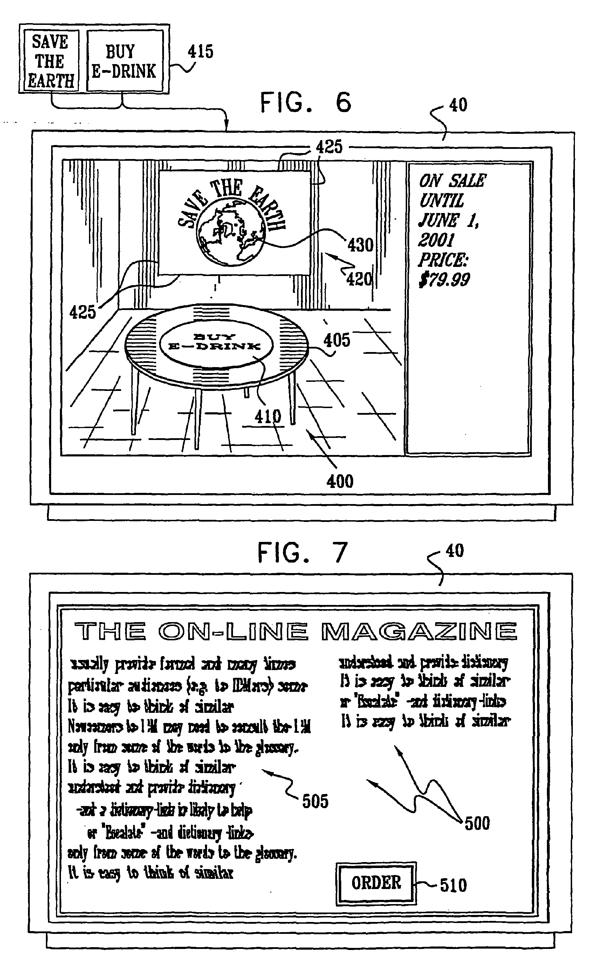

Similarly, Fig. 6 depicts an example of a case where the at least one item includes a product for sale, such as a table 400. The display boundaries of the table 400 preferably include a table top 405, and thus the table top 405 may be displayed with an interchangeable advertisement 410 determined by a matcher 415 that may be similar in structure and functionality to the matcher 370 of Fig. 5.

The at least one item may alternatively or additionally include a background advertisement or a poster 420 in which case the display boundaries of the item may include boundaries of the poster 425. An interchangeable advertisement 430 is then preferably displayed within the boundaries of the poster 420 in accordance with a determination of the matcher 415.

It is appreciated that the initial advertisement and the replacement advertisement may each include: a video advertisement; an audio/video advertisement or an audio-only advertisement. Alternatively or additionally, the initial advertisement and the replacement advertisement may each include an advertisement that is sensible by other human senses, such as an advertisement that activates a smell generating element (not shown), as is known in the art, that may be operatively associated with the STB 35 and controlled by the headend 15.

It is further appreciated that the initial advertisement may be associated with a first sponsor and the replacement advertisement may be associated with a sponsor other than said first sponsor. Thus, the user may be exposed to advertisements of a plurality of sponsors while playing one game or purchasing one item.

Preferably, display of interchangeable advertisements may be performed under parental control conditions so that parental control is applied to displaying of one of the initial advertisement and the replacement advertisement. For example, displaying of the replacement advertisement may be enabled if a parental control parameter allows display of the replacement advertisement, and displaying of the initial advertisement only may be enabled if the parental control parameter does not allow display of the replacement advertisement.

In accordance with another preferred embodiment of the present invention, an interactive magazine which includes an icon for ordering a pay television program may be transmitted to the user and displayed on the television 40. A simplified pictorial implementation of an example of such an interactive television application is depicted in Fig. 7. In the implementation depicted in Fig. 7, an interactive magazine 500 includes an article 505 referring to the pay television program, and an icon 510 at the end of the article 505. The processor 215 may then enable the user to order the pay television program from the interactive magazine 500 by selecting the icon 510.

In accordance with a further preferred embodiment of the present invention, the user may view a non-real time recorded interactive television program, and while viewing the non-real time recorded interactive television program a real-time alert relating to a real-time event may be transmitted to the user unit 20 (Fig. 1) which is operated by the user, and displayed on the television 40 (Fig. 1) after reception at the user unit 20 (Fig. 1). The real-time event may be, for example, a news flash or a sports flash. The user may thus receive alerts regarding, for example: a program determined to be of interest to the subscriber; a program transmitted over a television channel determined to be of interest to the subscriber; and events of general nature.

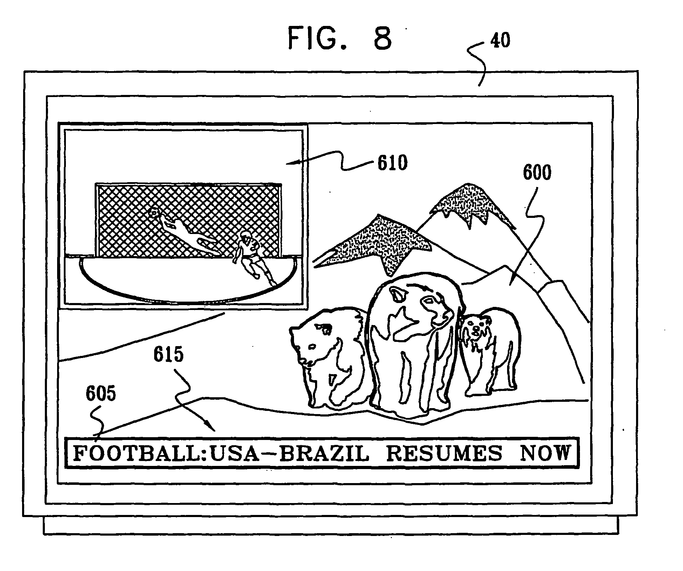

A simplified pictorial implementation of an example of such an interactive television application is depicted in Fig. 8. In the implementation depicted in Fig. 8, the non-real time recorded interactive television program is a movie 600, and the real-time alert is an alert 605 relating to resuming playing of a real-time sports game 610 which is preferably displayed in a picture-in-picture (PIP) window, for example, in response to a selection of the user. Preferably, the alert 605 is displayed in an overlay 615 overlaid on the non-real time recorded interactive television program 600. It is appreciated that the example of a PIP window is not meant to be limiting, and that persons skilled in the art would be able to substitute any other appropriate type of overlay 615 for the PIP window.

Preferably, the real-time alert 605 may be transmitted in response to a predetermined request of the subscriber, who may request transmission of real-time alerts to alert the subscriber of occurrence of real-time events. Alternatively, a requirement for transmission of real-time alerts may be comprised in a profile of the subscriber that is stored by a provider of the alert 605, and the provider of the alert 605 may preferably transmit the real-time alert 605 to the subscriber if the requirement for transmission of real-time alerts is comprised in a profile of the subscriber.

Additionally, the real-time alert 605 may be transmitted to subscribers that have already viewed the sports game 610 but have later tuned to a different program or to the non-real time recorded interactive television program 600. In such a case, determination that a subscriber has already viewed the sports game 610 and has later tuned to a different program or to the non-real time recorded interactive television program 600 is preferably provided by an intelligent agent at the user unit 20 (Fig. 1). Preferably, at least one highlight associated with the real-time event may be displayed to the user, and the user may be enabled to catch up with the real-time event by fast-forwarding through the at least one highlight using the remote control 255. Alternatively or additionally, the user may be enabled to tune to the real-time event and view a playback of the real-time event.

In accordance with another preferred embodiment of the present invention, interactive modules may be displayed to the user and each interactive module may be associated with a validity tag indicating a term of validity of the interactive module. Then, the interactive module may be utilized according to a value of the validity tag. The term of validity of the interactive module preferably includes at least one of the following: valid only in a real-time application of the interactive module; valid in an application of the interactive module that is associated with a real-time clock; and valid in real-time, delayed viewing and time shifted viewing applications of the interactive module.

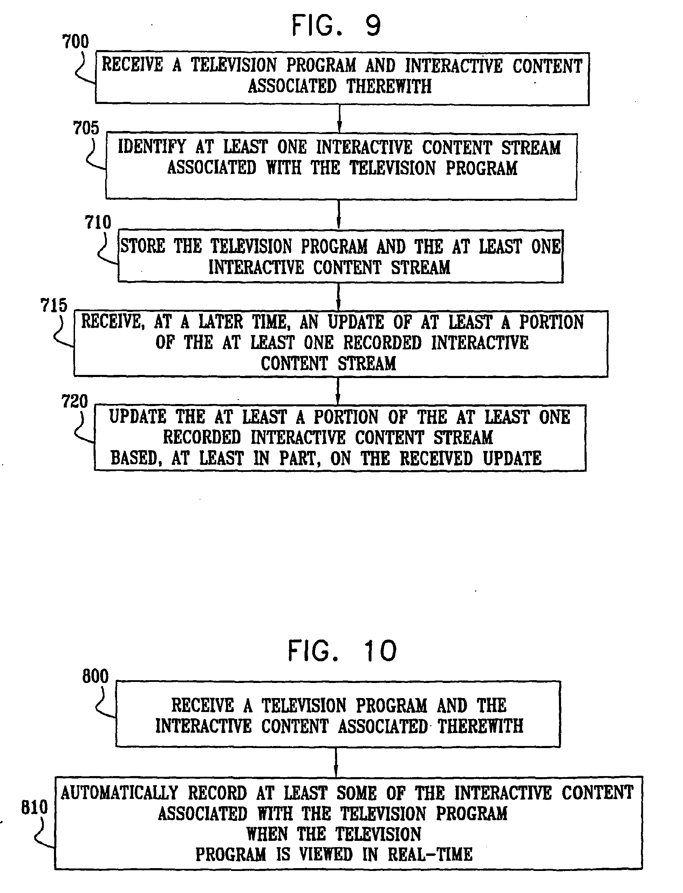

Reference is now made to Fig. 9, which is a simplified flowchart illustration of a preferred method of operation of the apparatus of Figs. 1 - 3.

Preferably, a television program and interactive content associated therewith are received (step 700). The interactive content is preferably embedded in at least one interactive content stream and reception of the television program and the interactive content may be simultaneous. Alternatively, the interactive content may be received before or after reception of the television program.

Preferably, after reception of the interactive content and the television program, at least one interactive content stream associated with the television program is identified (step 705). The television program and the at least one interactive content stream are then preferably stored (step 710).

At a later time, an update of at least a portion of the at least one recorded interactive content stream is preferably received (step 715), and the at least a portion of the at least one recorded interactive content stream is preferably updated based, at least in part, on the received update (step 720).

It is appreciated that the method referred to in Fig. 9 may also be used with a live television program that is viewed in real-time and is therefore not stored.

Reference is now made to Fig. 10, which is a simplified flowchart illustration of another preferred method of operation of the apparatus of Figs. 1 - 3.

Preferably, a television program and interactive content associated therewith are received (step 800). Then, at least some of the interactive content associated with the television program is automatically recorded when the television program is viewed in real-time (step 810).

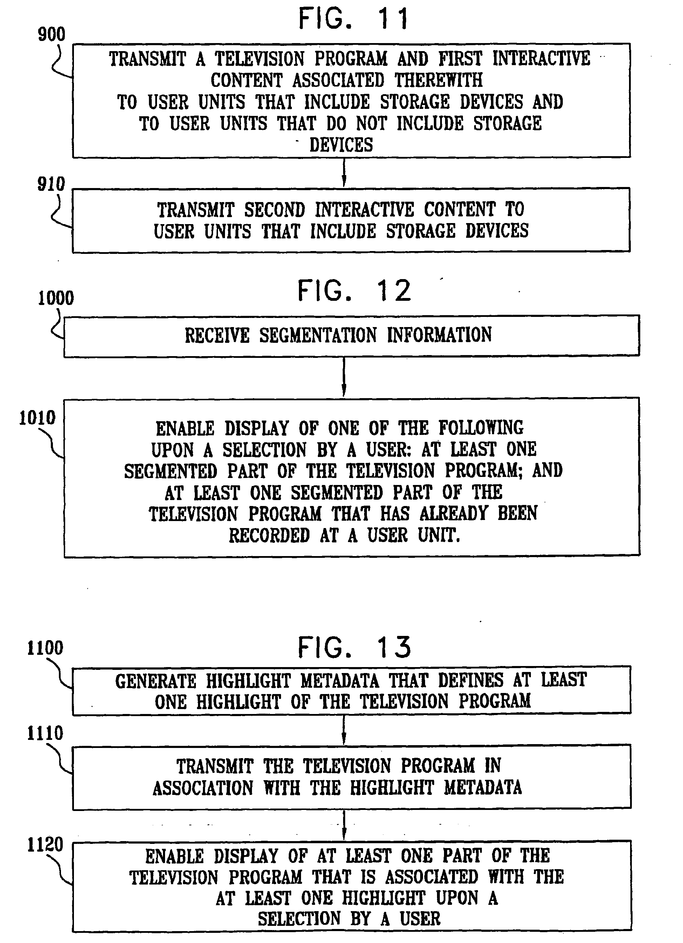

Reference is now made to Fig. 11, which is a simplified flowchart illustration of yet another preferred method of operation of the apparatus of Figs. 1 -3.

Preferably, a television program and first interactive content associated therewith that is directed to both user units that include storage devices and user units that do not include storage devices are transmitted (step 900). Additionally, second interactive content that is directed to user units that include storage devices is transmitted (step 910).

Reference is now made to Fig. 12, which is a simplified flowchart illustration of still another preferred method of operation of the apparatus of Figs. 1 - 3.

Preferably, segmentation information is received (step 1000). The segmentation information is preferably associated with one of the following: at least one part of the television program; and at least one part of the television program that has already been recorded at a user unit

Then, display of one of the following is enabled upon a selection by a user (step 1010): at least one segmented part of the television program; and at least one segmented part of the television program that has already been recorded at the user unit.

Reference is now made to Fig. 13, which is a simplified flowchart illustration of yet another preferred method of operation of the apparatus of Figs. 1 - 3.

Preferably, highlight metadata that defines at least one highlight of a television program is generated (step 1100). The television program is then transmitted in association with the highlight metadata (step 1110). Then, display of at least one part of the television program that is associated with the at least one highlight is preferably enabled upon a selection by a user (step 1120).

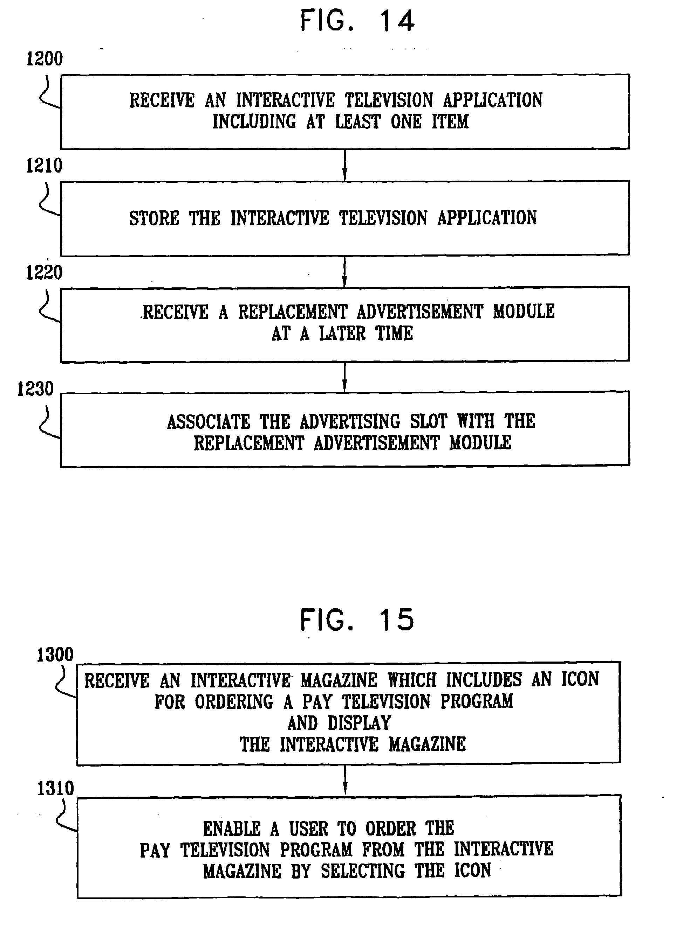

Reference is now made to Fig. 14, which is a simplified flowchart illustration of still another preferred method of operation of the apparatus of Figs. 1-3.

Preferably, an interactive television application including at least one item is received (step 1200). The interactive television application preferably has an advertising slot adapted to be associated with an advertisement associated with the at least one item. The interactive television application is then preferably stored (step 1210) and, at a later time, a replacement advertisement is preferably received (step 1220) and the advertising slot is preferably associated with the replacement advertisement (step 1230).

Reference is now made to Fig. 15, which is a simplified flowchart illustration of another preferred method of operation of the apparatus of Figs. 1 - 3.

An interactive magazine which includes an icon for ordering a pay television program is preferably received at a user unit and displayed thereat (step 1300). At the user unit, a user is preferably enabled to order the pay television program from the interactive magazine by selecting the icon (step 1310).

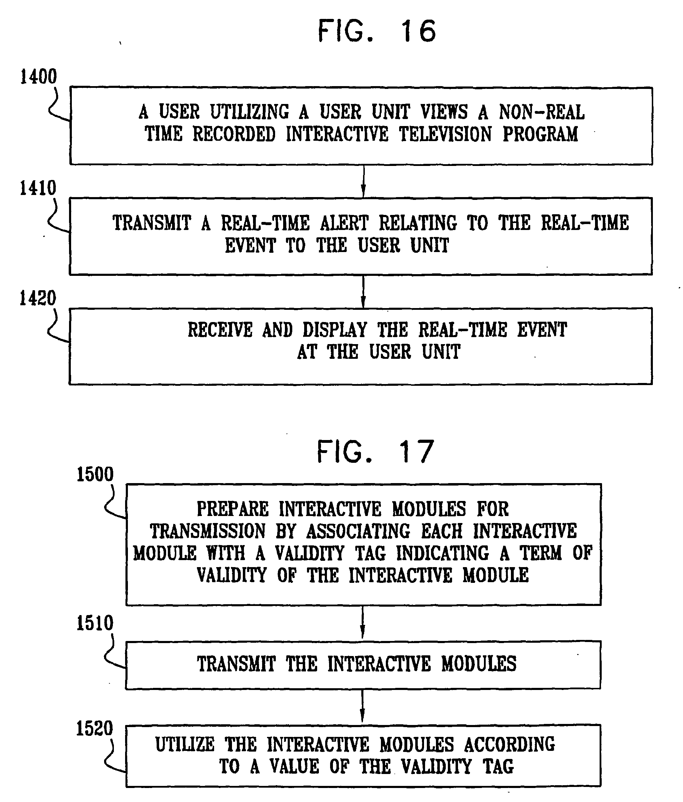

Reference is now made to Fig. 16, which is a simplified flowchart illustration of still another preferred method of operation of the apparatus of Figs. 1 - 3.

A user utilizing a user unit preferably views a non-real time recorded interactive television program (step 1400). When a real-time event occurs, a real-time alert relating to the real-time event is preferably transmitted to the user unit (step 1410) and received and displayed at the user unit (step 1420). It is appreciated that the method referred to in Fig. 16 may also be applied separately as a receiving method at the user unit in which a transmitted real-time alert is preferably received and displayed at the user unit

Reference is now made to Fig. 17, which is a simplified flowchart illustration of yet another preferred method of operation of the apparatus of Figs. 1 -3.

Preferably, interactive modules are prepared for transmission by associating each interactive module with a validity tag indicating a term of validity of the interactive module (step 1500). The interactive modules are then transmitted (step 1510) and utilized according to a value of the validity tag (step 1520). It is appreciated that the method referred to in Fig. 17 may also be applied separately as a receiving method at a user unit in which each interactive module that is received with a validity tag indicating a term of validity of the interactive module is preferably utilized according to the value of the validity tag.

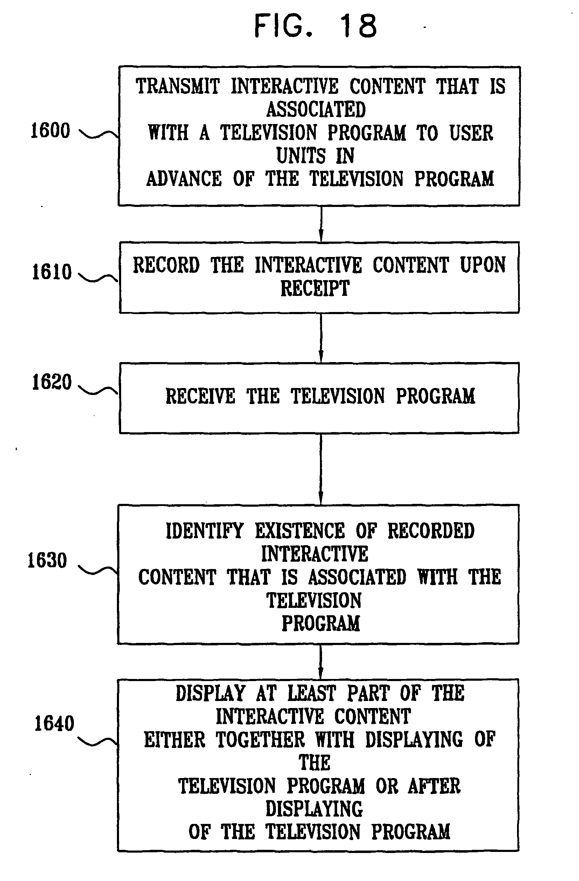

Reference is now made to Fig. 18 which is a simplified flowchart illustration of still another preferred method of operation of the apparatus of Figs. 1 - 3.

Preferably, interactive content that is associated with a television program is transmitted to user units in advance of the television program (step 1600). At a user unit, the interactive content is preferably recorded upon receipt (step 1610).

It is appreciated that recording of the interactive content upon receipt at the user unit may be performed in response to a determination that the interactive content is intended for future use at the user unit, such determination being preferably made in response to at least one of the following: a previous order of the interactive content or the television program by a user of the user unit; a determination of a provider of the interactive content; and a determination of an intelligent agent associated with the user unit.

Preferably, when the television program is later received (step 1620), existence of recorded interactive content that is associated with the television program is preferably identified (step 1630), and at least part of the interactive content is preferably displayed either together with displaying of the television program or after displaying of the television program (step 1640).

The method referred to in Fig. 18 may alternatively be applied separately as a receiving method at the user unit in which interactive content that is received before a television program is preferably recorded upon receipt, and when the television program is received, existence of recorded interactive content that is associated with the television program is preferably identified, and at least part of the interactive content is displayed either together with displaying of the television program or after displaying of the television program.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined only by the claims which follow:

## Claims

1. A method for displaying advertisements associated with at least one item of an interactive television application, the method comprising:
transmitting an interactive television application including said at least one item, the interactive television application having an advertising slot adapted to be associated with an advertisement associated with said at least one item;
storing the interactive television application; transmitting a replacement advertisement; and
associating, in response to said transmitting step, the advertising slot with the replacement advertisement.

2. The method according to claim 1 and also comprising:
providing a user unit, and
wherein the storing and the associating are performed in the user unit.

3. The method according to claim 1 or claim 2 and wherein:
said transmitting an interactive television application comprises transmitting an initial advertisement in association with the interactive television application; and
said storing comprises storing the interactive television application and the initial advertisement.

4. A method for displaying advertisements associated with at least one item of an interactive television application, the method comprising:
receiving an interactive television application including said at least one item, the interactive television application having an advertising slot adapted to be associated with an advertisement associated with said at least one item;
storing the interactive television application; receiving a replacement advertisement; and
associating, in response to said transmitting step, the advertising slot with the replacement advertisement.

5. The method according to claim 4 and also comprising:
providing a user unit, and
wherein the receiving, the storing and the associating are performed in the user unit.

6. The method according to claim 4 or claim 5 and wherein:
said receiving an interactive television application comprises receiving an initial advertisement in association with the interactive television application; and
said storing comprises storing the interactive television application and the initial advertisement.

7. The method according to claim 6 and also comprising displaying, upon selection by a user, the stored interactive television application with said initial advertisement or said replacement advertisement.

8. The method according to claim 7 and wherein the at least one item has display boundaries, and said displaying comprises displaying:
the stored interactive television application; and
one of the following within the display boundaries of the at least one item: said initial advertisement; and said replacement advertisement.

9. The method according to any of claims 1-8 and wherein said at least one item comprises at least one of the following: a game item; a background advertisement; a poster; and a product for sale.

10. The method according to any of claims 3 and 6-9 and wherein said initial advertisement and said replacement advertisement each comprises one of the following: a video advertisement; an audio/video advertisement; and an audio-only advertisement.

11. The method according to any of claims 3 and 6-10 and wherein said initial advertisement is associated with a first sponsor and said replacement advertisement is associated with a sponsor other than said first sponsor.

12. The method according to claim 7 or claim 8 and wherein said displaying comprises applying parental control to displaying of at least one of: the initial advertisement; and the replacement advertisement.

13. The method according to claim 12 and wherein said applying comprises: displaying the replacement advertisement if a parental control parameter allows display of the replacement advertisement, and displaying the initial advertisement if said parental control parameter does not allow display of the replacement advertisement.

14. Apparatus for displaying advertisements associated with at least one item of an interactive television application, the apparatus comprising:
means for transmitting an interactive television application including said at least one item, the interactive television application having an advertising slot adapted to be associated with an advertisement associated with said at least one item;
means for storing the interactive television application;
means for transmitting a replacement advertisement; and
means for associating the advertising slot with the replacement advertisement.

15. Apparatus for displaying advertisements associated with at least one item of an interactive television application, the apparatus comprising:
means for receiving an interactive television application including said at least one item, the interactive television application having an advertising slot adapted to be associated with an advertisement associated with said at least one item;
means for storing the interactive television application;
means for receiving a replacement advertisement; and
means for associating the advertising slot with the replacement advertisement.
